(19) Europäisches Patentamt

European Patent Office

Office européen des brevets

(11) **EP 1 662 130 A2**

(12) **DEMANDE DE BREVET EUROPEEN**
publiée en application de l'article 158, paragraphe 3 de la CBE

(43) Date de publication:
**31.05.2006 Bulletin 2006/22**

(51) Int Cl.:
***F02K 1/00*** (1968.09)

(21) Numéro de dépôt: **03780186.7**

(22) Date de dépôt: **16.12.2003**

(86) Numéro de dépôt international:
**PCT/ES2003/000637**

(87) Numéro de publication internationale:
**WO 2004/055353 (01.07.2004 Gazette 2004/27)**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(71) Demandeur: **Fall, Oumar Haidara**
**15900 Padron A Coruna (ES)**

(72) Inventeur: **Fall, Oumar Haidara**
**15900 Padron A Coruna (ES)**

(54) **MULTIPLICATEUR MECANIQUE AUTONOME**

(57)    Le mouvement oscillatoire d'un balancier (3) se transmette par l'intermédiaire d'un levier (5) á un double balancier (6) qui á son tour le transmette par l'intermédiaire d'un autre levier (5) á un balancier (4).

L'ajustage des relations des rayons des balanciers et les positions des pivots par rapport á la ligne d'union des balanciers permettent d'obtenir á la sortie une force supérieure á l'entrée, maintenant ou augmentant la vitesse.

Aditionalement, on peut coupler á l'entrée un convertisseur de mouvement oscillatoire en mouvement rotatif (18, 19) et á la sortie un convertisseur de mouvement oscillatoire en mouvement rotatif (23, 24).

FIG 3

Printed by Jouve, 75001 PARIS (FR)

**Description**

**Objet de l'invention:**

La présente invention se réfère à un système de transmission dénommée multiplicatrice Mécanique autonome; elle a pour fin l'augmentation de la force motrice ou l'augmentation de la force et de la vitesse sans affecter les vecteurs de la source motrice.

Dans le premier cas elle est multiplicatrice mécanique autonome de force motrice lorsque la multiplication concerne la force de la source motrice; en second lieu, elle est multiplicatrice mécanique autonome de force et de vitesse lorsque la multiplication se réfère á la force et á la vitesse d'une source motrice éliminant ainsi la relation de proportionalité qui existait entre la vitesse et la force de la source du mouvement motrice.

Une multiplicatrice mécanique autonome est composée des éléments de base que sont: La prise de mouvement ( accouplée avec un vibrateur), le pignon de poussée, les leviers ou les jeux de leviers, le groupe récepteur et de poussée, le pignon récepteur et l'arbre de sortie (accouplé avec un convertisseur).

**ANTECEDANTS DE L'INVENTION:**

Les transmissions ont pour objet de transmettre un mouvement d'un point (source motrice) á un autre (la charge); ce procédé peut être réalisé par deux méthodes déférentes:

- La première méthode est dite directe parce qu'elle n'influe pas sur les vecteurs de la source motrice (sans tenir en compte les pertes).
- La seconde méthode est indirecte et se divise en deux grandes catégories que sont les réducteurs qui ont la particularité d'augmenter la force et de réduire la vitesse motrice transmise á la charge; les surmultiplicateurs caractérisés par l'augmentation de la vitesse et la réduction de la force motrice reçue par la charge.

Les catégories des transmissions composées de réducteurs et de surmultiplicateurs se fondent sur les principes d'engrenage, de pignons, de chaînes de courroies etc.

Et le résultat correspond á une augmentation de l'une des vecteurs composant la source motrice au détriment de l'autre (la force ou la vitesse).

Dans l'état actuel des transmissions de mouvement on peut affirmer avec certitude que l'augmentation de la force entraîne une réduction de la vitesse de la source motrice transmissible.

**DESCRIPTION DE L'INVENTION**

La solution que propose l'invention est, de résoudre la problématique de la relation de proportionnalité qui existe entre la force et la vitesse dérivées d'une source motrice et transmissible á une charge par l'intermédiaire d'un système de transmission, permettant une augmentation considérable de la force sans affecter la vitesse de la source et vice et vers ça.

Pour la réalisation et de façon beaucoup plus concrète,une multiplicatrioce mécanique autonome sera composée d'éléments de base en conformités avec certaines règles de la physique et de la géométrie:

La prise de mouvement: en métal de bonne résistance á la traction, il est de forme polygonale et a pour fonction la transmission du mouvement moteur aux mécanismes formant la machine; elle peut être accouplée avec un vibrateur constitué d'un arbre á cames activant deux soupapes réparties de part et d'autre du pignon de poussée.
Le pignon de poussée: En métal de bonne résistance, il est de forme polygonale monté sur un arbre et disposant d'éléments qui lui permettent de pousser le ou les leviers en un mouvement de haut en bas et vice vers ça suivant un angle de poussée près défini.
Le levier ou jeu de leviers: a pour mission la réception du mouvement de poussée et dans sa trajectoire entraîne par effet répulsif la partie réceptrice du groupe récepteur et de poussée.

Les leviers sont situés entre le pignon de poussée et la partie réceptrice du groupe et entre la partie de poussée du groupe et du pignon récepteur; ils sont constitués d'éléments qui leurs permettent d'augmenter et de réduire de longueur durant l'action de va et vient; en métal de bonne résistance aux déformations par élongation et torsion, ses points d'appui sont déviés par rapport aux centres des pignons de poussée, récepteur et du groupe récepteur et de poussée.

Groupe récepteur et de poussée: Fonctionne comme un récepteur du mouvement de va et vient du premier levier sur la partie réceptrice et le transmette á la partie formée par un pignon de poussée pour actionner un autre levier par l'intermédiaire de son arbre d'accouplement, le rayon de la partie réceptrice est inférieure au rayon de la partie de poussée.

<u>Le pignon récepteur:</u> De qualité similaire aux autres pignons reçoit les mouvements répulsifs du second levier pour le transmettre á l'arbre de sortie.

<u>L'arbre de sortie:</u> En métal de bonne résistance il est situé á la sortie de la multiplicatrice mécanique autonome il peut être couplé avec deux roues fontionant suivant les principes d'une roue de bicyclette pour actionner comme un convertisseur de mouvement oscillatoire en mouvement circulaire.

En définitive la multiplication augmente lorsque nous transmettons par le billet d'un arbre d'accouplement le mouvement reçu par le pignon récepteur pour actionner un levier qui de nouveau va entrainner un autre groupe récepteur et de poussée et cela plusieurs foies avant de transmettre le mouvement au pignon récepteur pour actionner l'arbre de sortie; ce procédé correspond á la boucle de multiplication.

Une multiplicatrice mécanique autonome est du type multiplicatrice mécanique autonome de force motrice lorsque la multiplication concerne uniquement la force motrice; dans le cas où la force enregistrée á la sortie est supérieure á la force á l'entrée et la vitesse angulaire de la sortie supérieure á la vitesse a l'entrée, la machine correspond á une multiplicatrice mécanique autonome de force et de vitesse; quand on se réfère á une répartition des éléments faisant la réception au niveau du pignon récepteur, leurs nombres seront inférieurs aux éléments (guides, cames,pales, etc.) répartis sur les pignons de poussée.

<u>Les principes de la physique et de la géométrie:</u> Considérant les éléments de base formant une multiplicatrice mécanique autonome qui sont un ensemble de pignons et de leviers en conformités avec les règles de la physique et de la géométrie suivantes:

Un pignon de poussée avec un rayon de poussée $R_1$ , un levier ou jeu de leviers I avec un facteur de levier $F_1$ dans sa position A et un facteur de levier $F_{1'}$ dans la position A', le point d'appui du levier est dévié par rapport aux centres du pignon de poussée et du groupe récepteur et de poussée; dans ce cas $1 < F_{1'} < F_1 < \pi$, un groupe récepteur et de poussée avec le rayon dont la partie réceptrice $R_2 = R_1 * F_{1'} / \pi$, le rayon de la partie de poussée est égale au rayon du pignon de poussée; un autre levier ou jeu de leviers I avec un facteur de levier $F_2$ dans sa position B et un autre facteur de levier $F_{2'}$ dans la position B' le point d'appui du levier est dévié par rapport aux centres du groupe récepteur et de poussée et le pignon récepteur, $1 < F_2 < F_{2'}$, un pignon récepteur avec le rayon $R_4 = R_1 + (F_1 + F_{1'} / 2)$, la multiplication minimale dans ces conditions serait égale á $F_2 + F_{1'} / 2 = F$, l'angle de poussée et récepteur á la sortie serait $\alpha \subseteq 47°$, la multiplication par l'intermédiaire de la boucle de multiplication correspond á $F^n$ avec n le nombre de groupe récepteur et de poussée moins le premier; lorsque les angles d'ocsillation á l'entrée et á la sortie sont égaux le mécanisme est une multiplicatrice mécanique autonome de force motrice, lorsque le rayon $R_4 = \subseteq R_1 + (F_1 + F_{1'}/2) \rightarrow R_1 + (F_{1'} + F_1 / 2)$ c le mécanisme sera une multiplicatrice mécanique autonome de force et de vitesse; lorsque les leviers I et II effectuent la trajectoire (AB) la multiplication sera égale $(F_1 * R_2 / R_3) + (F_2 * R_4 / R_1)$, le résultat est sensiblement égale à la position (A' B') qui correspond á $(F_{1'} * R_2 / R_3) + (F_2 * R_4 / R_1)$.

## Description des dessins:

Pour compléter la description ainsi réaliser et dans l'optique d'aider á une meilleure compréhension des caractéristiques de l'invention, il a été accompagné dans la présente mémoire descriptive et comme partie intégrante des dessins á caractères illustratifs et non limitatifs représentant ceux qui suit:

La figure 1 montre une représentation aux fins d'analyse scientifique pour faciliter la compréhension des conditions qui permettent d'obtenir le résultat d'une multiplicatrice mécanique autonome en conformité avec l'objet de la présente invention.

La figure 2 montre une vus á la coupe d'une multiplicatrice mécanique autonome utilisant deux jeux de leviers.

La figure 3 montre une vus des composants d'une multiplicatrice mécanique autonome accouplés avec un vibrateur á l'entrée, un convertisseur á la sortie et les leviers I et II.

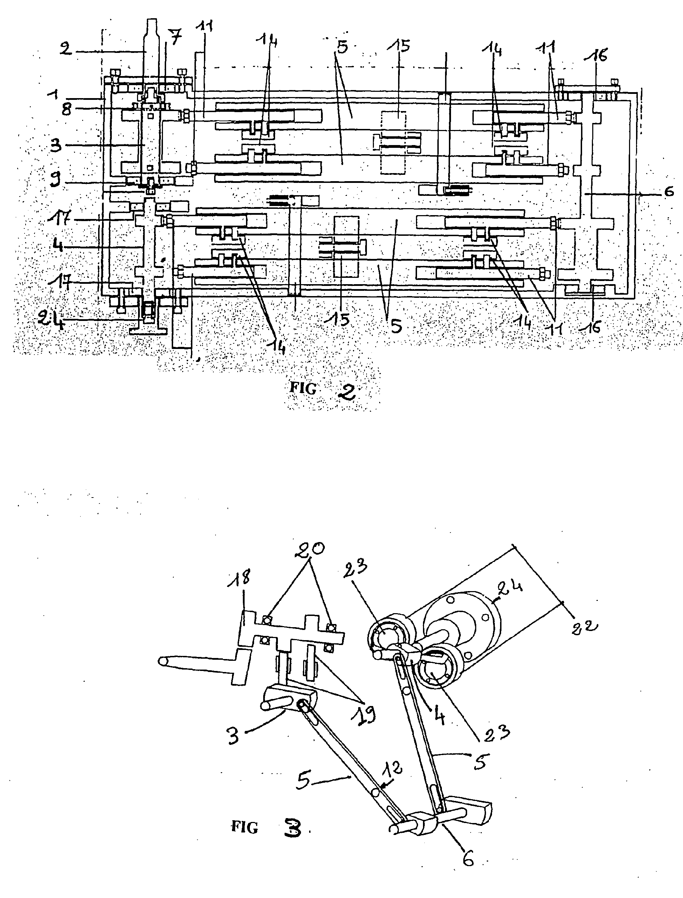

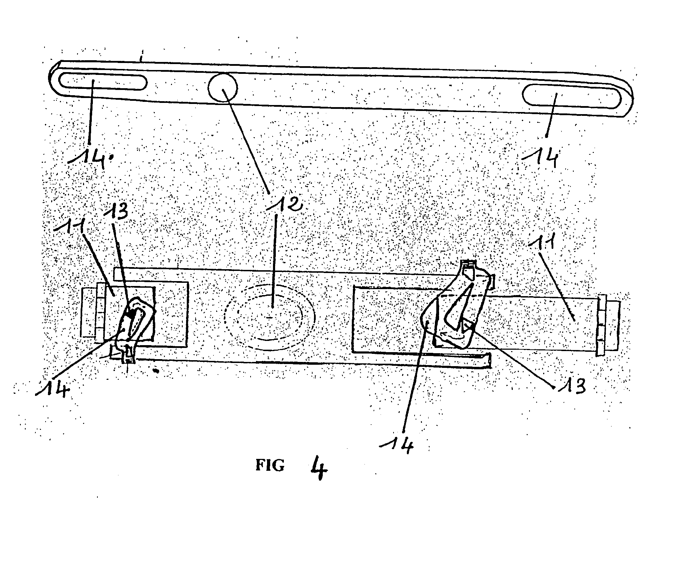

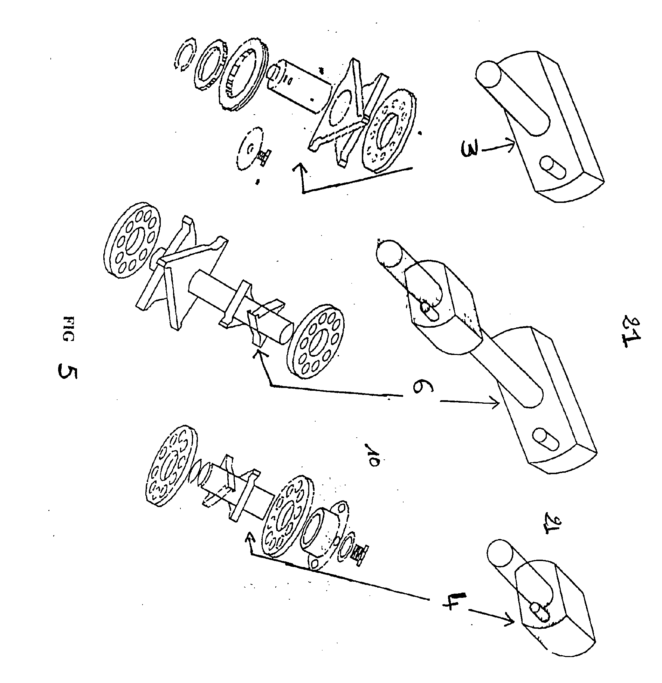

Les figures 4 et 5 montrent une vus des éléments constituant les deux types de leviers, les pignons de poussée et récepteur et groupe récepteur et de poussée.

**Organigramme**:

```
┌─────────────────────────┐        ┌──────────────────────────┐
│   Prise de mouvement    │───────▶│   Pignon de poussée      │
│                         │        │                          │
│      (vibrateur)        │        └──────────────────────────┘
└─────────────────────────┘                     │
                                                 ▼
                               ┌──────────────────────┐     ┌──────────────────────┐
                               │   Levier ou jeu       │────▶│  Pignon récepteur    │
   Boucle de multiplication    │                       │     └──────────────────────┘
                               │   De leviers          │                │
                               └──────────────────────┘                 │
                                          │                             ▼
                               ┌──────────────────────┐     ┌──────────────────────┐
                               │  Groupe récepteur     │     │   Arbre de sortie    │
                               │                       │     │                      │
                               │   et de poussée       │     │   (convertisseur)    │
                               └──────────────────────┘     └──────────────────────┘
```

L'organigramme reflète les différentes étapes parcourrues par la transmission du mouvement dans une multiplicatrice mécanique.

La force motrice actionne 1A prise de mouvement qui transmette le mouvement reçu au pignon de poussée ou par l'intermédiaire d'un vibrateur actionnant le pignon de poussée et entrainne par action de poussée le levier ou jeu leviers qui à son tour, par action répulsive antagonique et chronologique résultant du mouvement de va et vient entraîne la partie réceptrice du groupe récepteur et de poussée; le groupe récépteur par l'intermédiaire de son arbre d'accouplement transmette le mouvement à la partie formée par un pignon de poussée pour actionner autre levier ou jeu de leviers; du mouvement répulsif du levier on peut actionner un autre groupe récepteur et de poussée et ainsi successivement jusqu'au moment où les actions du levier seront reçues par le pignon récepteur pour être acheminées á l'arbre de sortie en direction de la charge ou par l'intermédiaire d'un convertisseur pour entrainner la charge.

### Réalisation préférentielle de l'invention:

A la vus des figures, on peut observer que la conception des pièces et équipements formant une multiplicateur mécanique sera conforme aux spécifications techniques suivantes:

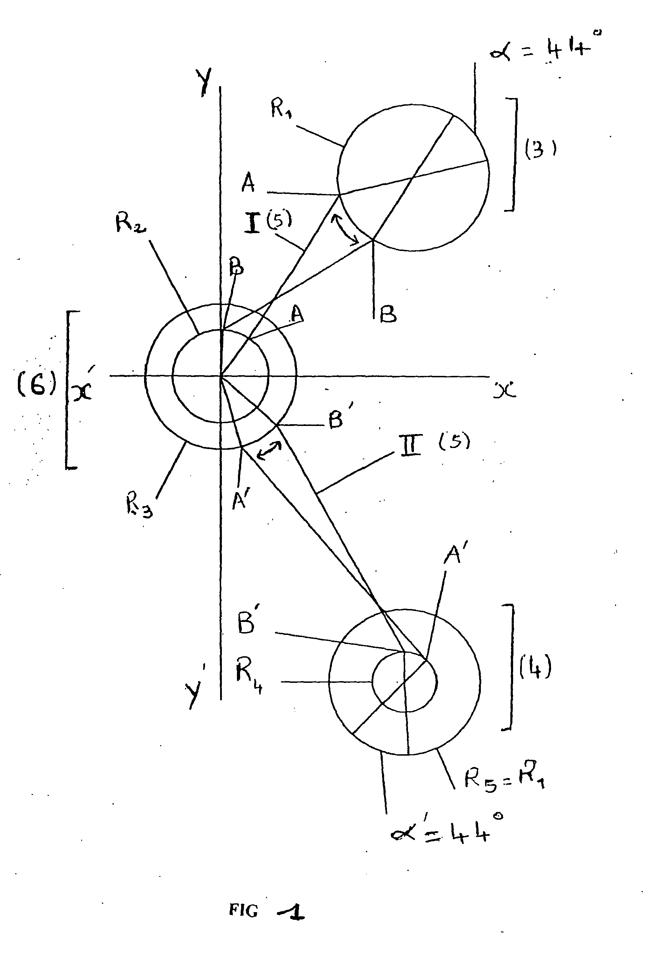

- Le type concerne les informations relatives au mode de multiplication, ainsi nous indiquerons si la machine est une multiplicatrice mécanique autonome de force motrice ou de force et de vitesse; à ce niveau la figure 1 nous éclaire quant á l'angle de (44°) parcourrue par le pignon de poussée (3) durant la trajectoire de poussée (A, B) du levier 1 (5) est égale au parcours du pignon récepteur (4) et correspond à (A', B') sous l'influence de l'effet répulsif du levier II (5); le tout par l'intermédiare du groupe récépteur et de poussée (6) qui recoie par le billet de la partie récéptrice l'action répulsive du premier levier et avec sa partie de poussée propulse le second levier.
  La force transmise á la sortie est supérieure á la force appliquée à l'entrée, dans ce cas le mécanisme est une multiplicatrice mécanique autonome de force, le rayon du pignon récepteur est égal a $R_4 = R_1 + (F_1 + F_1/2)$.
  Dans le cas où le rayon du pignon récepteur est inférieur á la mesure précitée le mécanisme se convertie en une multiplicatrice mécanique autonome de force et de vitesse parce que l'action répulsive du levier II atteint un angle supérieur sur le pignon récepteur.
- A part le mode de multiplication on indiquera la catégorie qui permette d'obtenir les données relatives au facteur multiplicateur (F) entre la source motrice reçue par la machine et la somme restituée á la sortie; á ce niveau, le pignon récepteur se convertie en groupe récepteur et de poussée car, par l'internédiaire de son arbre d'accouplement transmette les actions dérivées de la partie récéptrice á la partie de poussée pour actionner un autre levier qui par effet répusif entraime un autre groupe récepteur et de poussée de la même maniére que le premier groupe; ce procédé peut être répèter plusieurs fois jusqu'au moment ou l'action du levier sera transmise au pignon récepteur pour être acheminée á la sortie.

A partir de cette structure de base et en d'autres termes, le bloque (1) formant le corps de la machine en métal de bonne résistance et de formes diverses, la prise de mouvement(2) monté sur un roulement (7), transmette de façon directe ou indirecte le mouvement de la source motrice par l'intermédiaire d'un synchrone (8) ou un vibrateur constitué d'un arbre á cames (18) monté sur deux roulements (20) actionnant deux soupapes (19); l'action reçue par le pignon de poussée (3) monté sur les roulements (9) et constitué de cames ou de pales (10) dans certains cas de guides (21), pousse le levier ou jeu de leviers (5) par l'intermédiaire du piston de levier (11) orienté par les guides (13) logés dans les canalisations (14); du mouvement de va et vient des balanciers (15) le point d'appui du levier formé par les axes (12) permette d'obtenir l'effet répulsif pour entrainner la partie récéptrice du groupe récépteur et de poussée (6) monté sur deux roulements (16); la partie de poussée du groupe actionne un autre levier ou jeu de leviers entraînnant á son tour par effet répulsif le pignon récépteur (4) monté sur deux roulements (17) qui transmette le mouvement á l'arbre de sortie (24) ou par le billet d'un convertisseur monté sur deux roulements (23) et formé par deux roues á systéme de byciclette (22) et l'arbre de sortie.

Considérant la figure 1 avec un pignon de poussée de rayon $R_1$ = 94,248 Cm, un groupe récepteur et de poussée avec le rayon de la partie réceptrice $R_2$ = 60 Cm et $R_3$ rayon de la partie de poussée égale á $R_1$, un pignon récepteur avec un rayon $R_4$ = 40 Cm, le levier ou jeu de leviers 1 de longueur L = $L_1$+$L_2$ = 160,8395 Cm+ 59,2973 Cm avec un facteur de levier $F_1$ = $L_1$ / $L_2$ = 2,71245 durant la position (A, A') et de longueur L'= $L_1$+ $L_{2'}$ = 148,6112 Cm +74,3056 Cm avec un facteur de levier $F_{1'}$ =$L_1$ /$L_2$ = 2 durant la position (B, B) la déviation du point d'appui du levier par rapport aux centres de $R_1$ et $R_2$ de 19,9301 Cm; un autre levier ou jeu de leviers de longueur 1=$1_1$ + $1_2$ = 264,6174 Cm + 94,1077 Cm avec un facteur de levier $F_2$ = $1_1$ / $1_2$ = 2,8118 durant la position (A', A') et de longueur 1'= $1_{1'}$+ $1_{2'}$ = 261,7499 Cm avec un facteur de levier $F_{2'}$ = $1_{1'}$/ $1_{2'}$= 3,7796 durant la position (B', B') de plus une déviation du point d'appui de 21,9286 Cm.

Les angles de poussée et récepteur sont égaux, correspond á 44° et signifie que la vitesse est constante entre l'entrée et la sortie; l'orsque le mécanisme effectue la trajectoire (A, B) la force transmise á la sortie sera:

Dans la position (A, A') ($F_1$*$R_2$/$R_3$)+ ($F_2$*$R_4$/$R_1$) = 2,9303$\cong$ ($F_1$+ $F_{2'}$)/ $F_{1'}$

Dans la position (B, B') ($F_1$*$R_2$/$R_3$)+ ($F_2$*$R_4$/$R_1$)= 2,8773$\cong$ ($F_1$+ $F_{2'}$)/ $F_{1'}$

Le facteur de multiplication minimum durant le parcours (A, B) est F $\cong$ ($F_2$ + $F_{1'}$ ) / $F_{1'}$ et représente 2,4; le résultat obtenu à la sortie est supérieur et correspond á une multiplicatrice mécanique autonome de force.

On ne considère pas nécessaire de procéder á une extension de la description pour que, quiconque, expert en la matière puisse comprendre les avancées et les avantages qui découlent de cette invention.

Les matériaux, les formes, les dimensions et les dispositions sont susceptibles de variés dans la mesure où elles n'entraînent pas une altération dans l'essentielle de l'invention.

Les termes dans les quelles cette mémoire a été rédigée doivent être considérer dans un sens beaucoup plus larges et non limitatives.

## Revendications

1. Une multiplicatrice mécanique est un systéme de transmission qui s'appuie sur l'effet de Levier avec un ensemble de pignons disposés en conformités avec la relation d'egalitée entre les vitesses angulaires à l'entrée et á la sortie et du facteur multiplicateur; elle est multiplicatrice mécanique autonome de force motrice lorsque la multiplication conserne la force recue; il se convertie en multiplicatrice mécanique autonome de force et de vitesse lorsque le résultat se réfère á une augmentation de la force et de la vitesse transmisse; elle est carractérisée par:

   1) L'utilisation au minimun d'un jeu de leviers (I et II) monté avec un ensemble de pignons (de poussée, récepteur et groupe récepteur et de poussée) pour obtenir un facteur multiplicateur F toujours supérieur á l'unité (1) de la source motrice.

   2) La stucture de base des leviers comprend un systéme d'èlongation et de réduction de la longueur, lorsqu'il sagit d'un jeu de leviers équipé de pistons ou un levier avec canalisations de guides dans la partie réceptrice et répulsive permettant de le positioner durant le parcours du pignon de poussée; les guides de pistons jouent le même rôle durant les actions d'oscillations.

   3)Le pignon de poussée est struturé de part et d'autre de cames pour permettre la poussée du levier de haut en bas et suivant un angle prés déterminé; considérant la mission du pignon de poussée on peut lui insére un guide pour jouer le rôle de poussée et de balancier par l'intermédiaire de la canalisation du levier sous l'influance d'un vibrateur.

   4)Le pignon récepteur est structuré de la même manière que le pignon de poussée, son rayon correspond à une relation d'égalité avec les facteurs des leviers.

   5) Le groupe récepteur et de poussée est un ensemble de pignons de poussée et récepteur tandis que la partie réceptrice du premier a un rayon supérieur au rayon du pignon récepteur, sa fonction consite à recevoire les actions répulsives des leviers et de les transmettre en actions de poussée aux autres leviers; la différence entre les groupes récepteur et de poussée d'une multiplicatrice mécanique autonome se trouve entre les rayons des parties réceptrices.

6) La multiplication de la vitesse réalisée par une multiplicatrice mécanique autonome de force et de vitesse á pour conséquence l'augmentation de la force motrice restituée, á ce niveau nous tenons en compte les caractéristiques suivantes:

L'angle parcourru par le pignon de poussée est inférieur á l'angle parcourru par le pignon récepteur.
Le diamétre de la partie réceptrice de certains groupe récepteur et de poussée ont le même rayon que le pignon récepteur et les autres ont un rayon supérieur, de plus les angles parcourrus sont différents.
La vitesse angulaire de la sortie est supérieur.

7) Formules et théories scientifique:

Fondamentalement une multiplicatrice mécanique autonome (un pignon de poussée,un groupe récepteur et de poussée, un jeu de leviers et un pignon de récepteur) est un système de transmission disposé pour accomplir un travail, pour cela les formules suivantes sont nécéssaires:

Avec L le parcourre du pignon de poussée égale au parcours du pignon récepteur, $F_{1'}$, $F_1$, $F_2$,$F_{2'}$, les facteurs des leviers par rapport aux positions (AB), (A'B'), P le poids de la charge, $R_1$,$R_2$, $R_3$, $R_4$, les rayons des pignons.
Le facteur multiplicateur moyen de la multiplicatrice mécanique autonome sera;

$$F= \frac{[(F_1{}^* R_2/ R_3) + (F_2{}^* R_4/ R_1)\,] + [(F_{1'}{}^* R_2/ R_3) + (F_{2'}{}^* R_4/ R_1)]}{2}$$

Le facteur minimun sera $\boxed{F= (F_{2'} +F_{1'})/F_{1'}}$ .

A l'entrée le travail $W = P * 9,8 * L$ et á la sortie correspondra à $\boxed{P *9,8 *L *F}$ ;

lorsque la multiplicatrice comprend plusieurs groupes récepteur et de poussée, le travail á la sortie sera $W * F^{(n-1)}$ avec **n** le nombre de groupes récepteur et de poussée.
La relation d'ègalitée qui existe entre les rayons des pignons et des groupes:

$$\boxed{R_2 =R_1{}^* F_{1'}/\pi} \qquad \boxed{R_4= R_1+ (F_{1'}+ F_1 /2')}$$

8) En ce qui concerne les nouvelles mesures et alternatives de réalisation ou d'utilisation on peut énumérer les cas suivants:

**I** Dans l'industrie automobile la multiplicatrice mécanique autonome décrit peut être couplé, en tant qu'élément intégrant ou séparé, à un systéme de différentiel de manière á propulser des voitures, des camions et des machines industrielles ou á produire de la pression.
**II** Dans le domaine de la production d'énergie électrique á partir d'une source thermique, hydraulique, éolienne, nucléaire, solaire ou électrique, la multiplicatrice mécanique autonome peut servir de relais avec un accouplement de réducteurs entre la sorce motrice et l'alternateur **III** Dans le domaine de l'industrie maritime, la dite multiplicatrice peut être utilisé pour pousser les navires lorsqu'il est couplé á la pale du navire.
**IV** Ce type de levier peut être également utiliser pour faire tourner le vilbrequin d'un moteur à combustion sous l'effet de l'explosion du combustible dans la chambre de combustion, en poussant un coté du levier de sorte que le vilbrequin entraine l'autre coté du levier par effet de répulsion.

**V** L'utilisation de l'effet gravitationnel comme source d'énergie et de mouvement continu.

FIG 1

FIG 2.

FIG 3.

FIG 4

FIG 5